# EUROPEAN PATENT SPECIFICATION

(11) **EP 1 264 684 B1**
(45) Date of publication and mention of the grant of the patent: **04.05.2005**
(21) Application number: 01113948.2
(22) Date of filing: 08.06.2001
(51) Int. Cl.: B32B 27/08, A41D 19/00, A61L 15/22, A61L 15/42

(54) **Moisure vapour permeable, liquid impermeable multilayer structures with enhanced moisture vapour permeability and dimensional stability and articles comprising said structures**
Wasserdampfdurchlässige, flüssigkeitsundurchlässige Verbundstruktur mit verstärkter Wasserdampfdurchlässigkeit und Dimensionsstabilität sowie Artikel diese Strukturen enthaltend
Structure composite perméable à l'humidité et imperméable au liquide avec perméabilité à l'humidité renforcée et une stabilité dimensionnelle améliorée et articles comprenant ces structures

(43) Date of publication of application: 11.12.2002
(73) Proprietor: THE PROCTER & GAMBLE COMPANY, Cincinnati, Ohio 45202 (US)
(72) Inventor: Corzani, Italo, 66100 Chieti (IT); Mariani, Manuel, 40067 Pianoro (Bologna) (IT)
(74) Representative: Veronese, Pancrazio

(56) References cited:
- EP-A- 0 539 604
- WO-A-01/41601
- WO-A-95/23696
- WO-A-98/10669
- WO-A-99/64078
- WO-A-99/64237
- WO-A-99/64499
- US-A- 5 827 252
- US-A- 5 840 812
- US-A- 5 950 264

## Description

### Field of the Invention

The present invention relates to multilayer structures which are moisture vapour permeable and liquid impermeable and have an enhanced moisture vapour permeability and dimensional stability. Such structures are utilised in articles, preferably shape-formed three dimensional articles, which can find a variety of applications wherein moisture vapour permeability combined with liquid imperviousness are desirable.

### Background of the Invention

Articles comprising structures which provide a liquid barrier in addition to providing moisture vapour permeability are known in the art. Particularly preferred for this type of moisture vapour permeable, liquid impermeable articles are hydrophilic thermoplastic compositions forming a continuous structure, e.g. a continuous film that does not allow the flow of moisture vapour through open pores or apertures in the material, but does transfer substantial amounts of moisture vapour through the film by absorbing water on one side of the film where the moisture vapour concentration is higher, and desorbing or evaporating it on the opposite side of the film where the moisture vapour concentration is lower. Such a continuous film is also known in the art as a monolithic film.

For example WO 95/16746 discloses films prepared from mixtures of a) block copolyether ester, block copolyether amides (e.g. Pebax™) and or polyurethane and b) thermoplastic polymer which is incompatible with (a), and c) a compatibiliser. The films are liquid impermeable and have moisture vapour permeability of about 700 g/m². day. Also, US 5,447,783 discloses a vapour permeable water resistant multi component film structure having at least three layers. The outer layers are hydrophobic copolyetherester elastomers having a thickness of 1.3-7.6 micrometers and a WVTR of 400-2500 g/m²· 24h and the inner layer is a hydrophilic copolyetherester elastomer having a thickness of 7.6 -152 micrometers and a WVTR of at least 3500 g/m²· 24h.

US 5,445,875 discloses a waterproof, bloodproof and virusproof breathable laminate. The laminate comprises a woven/nonwoven fabric and an extruded film such as Hytrel™ having a thickness of about 1mil (25.4 micrometers).

Other composite laminates are described for example in US 5,599,610 which discloses tri-laminated fabric for surgical gowns comprising outer layers of woven fabric and an inner layer of a microporous polyurethane membrane. The microporous film has a thickness of 12-55 micrometers and a MVTR of 1100 g/m²· 24h upright and 5500 g/m²· 24h inverted (ASTM E96-B). Polyether-polyurethane adhesive is used to join the layers.

Similarly, US 5,532,053 discloses a high moisture transmission medical film which can be laminated onto a nonwoven material. The laminate film comprises a first layer of polyetherester copolymer and second and third layers selected from a specified group of polymers. The film has a MVTR of greater than 750 g/m^{2.} 24h (ASTM F1249) and a thickness of less than 1 mil (25.4 micrometer) preferably 0.6 mil to 0.75 mil (15-19 micrometers).

US 4,938,752 discloses absorbent articles comprising films of copolyether esters which have reduced water permeability, a water vapour permeability of 500 g/m²· 24h (as measured in a specified described test) and a thickness of 5-35 micrometers. There is no disclosure of a supportive substrate.

US 4,493,870 discloses a flexible, layered waterproof product comprising a textile material covered with a film of a copolyetherester having an MVTR of at least 1000 g/m²· 24h (ASTM E96- 66) having a thickness of 5 to 35 micrometers.

GB 2024100 discloses a flexible layered water resistant article comprising a microporous hydrophobic outer layer which is moisture vapour permeable but resists liquids and a hydrophilic inner layer of polyetherpolyurethane having a MVTR of above 1000 g/m²· 24h.

In our patent applications WO 99/64078 and WO 99/64499, shape-formed three dimensional articles are disclosed comprising thermoplastic compositions for making hydrophilic continuous moisture vapour permeable, liquid impermeable structures, e.g. layers, comprised in said articles, having preferred characteristics of moisture vapour permeability and liquid imperviousness. The thermoplastic compositions comprise preferred thermoplastic polymers such as polyurethanes, poly-ether-amides block copolymers, polyethylene-acrylic acid copolymers, polyethylene oxide and its copolymers, poly lactide and copolymers, polyamides, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate with a vinyl acetate content of at least 28 weight %, polyvinyl alcohol and its copolymers, polyvinyl ethers and their copolymers, poly-2-ethyl-oxazoline and derivatives, polyvinyl pyrrolidone and its copolymers, thermoplastic cellulose derivatives, or mixtures thereof. The disclosed preferred thermoplastic compositions are also readily processable so as to provide a moisture vapour permeable liquid impermeable structure, to be comprised in the shape-formed article, by means of known methods, e.g. by coating a suitable layer having the desired thickness onto a substrate, so facilitating the processing of said thermoplastic composition in the manufacture of said articles, for example avoiding the need of complex processing equipment such as extrusion apparatuses. This is achieved by modifying the viscosity of the thermoplastic polymers by means of the inclusion in the composition of a suitable plasticiser that lowers such viscosity. This allows to utilise with these preferred thermoplastic compositions process conditions for the selected forming method which are less demanding in terms of temperature and pressure, e.g. those known in the art for the direct coating of low viscosities hot melts onto a substrate in order to form a moisture vapour permeable, liquid impervious structure in form of film or layer.

In addition, as described in the above patent applications, by suitably selecting the plasticiser or blend of plasticisers in the thermoplastic composition a shape-formed three dimensional moisture vapour permeable liquid impervious article can be obtained comprising a moisture vapour permeable, liquid impermeable structure, e.g. a film or layer, which comprises said thermoplastic composition and has an enhanced moisture vapour permeability if compared to a corresponding structure comprising a thermoplastic composition not comprising the plasticiser or blend of plasticisers. Of course the preferred plasticiser or blend of plasticisers can also adjust the viscosity of the thermoplastic composition to allow the formation of said structure, e.g. in form of a film or a layer, from the thermoplastic composition by means of a simplified process.

Composite structures similar to those described in the two patent applications mentioned above are also disclosed in our patent application WO 90/64237, which structures comprise a thermoplastic liquid impérmeable, moisture permeable film applied onto a permeable support layer.

While the above articles according to the above patent applications function well, it has surprisingly been discovered that the above articles can be improved in terms of dimensional stability by the use of a moisture vapour permeable, liquid impermeable multilayer structure comprising at least two layers having different thermoplastic compositions. As a matter of fact, while articles according to the above patent applications are very useful because they are highly breathable due to their hydrophilic composition, it was discovered that for certain applications and particularly for articles which are intended to come in contact with liquid water or which could come in contact with liquid water, such as for example kitchen or working gloves, they can be improved in terms of dimensional stability by avoiding that they swell (and therefore they change their dimensions) by absorbing liquid water by the use of a moisture vapour permeable, liquid impermeable multilayer structure according to the present invention. Said multilayer structure comprises at least a moisture vapour permeable, liquid impermeable first layer (which is intended to come in contact with liquid water) and at least a moisture vapour permeable, liquid impermeable second layer (which is intended to be protected from contact with liquid water by said first layer) wherein said first layer has a water absorption lower than the water absorption of said second layer.

### Summary of the Invention

The present invention refers to a moisture vapour permeable, liquid impermeable multilayer structure, comprising at least a moisture vapour permeable, liquid impermeable first layer and at least a moisture vapour permeable, liquid impermeable second layer, said second layer comprises:
a thermoplastic polymer or mixture of polymers selected from the group consisting of polyurethanes, poly-ether-amides block copolymers, polyethylene-acrylic acid copolymers, polyethylene oxide and its copolymers, poly lactide and copolymers, polyamides, polyesters, co-polyesters, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate with a vinyl acetate content of at least 28 weight %, polyvinyl alcohol and its copolymers, polyvinyl ethers and their copolymers, poly-2-ethyl-oxazoline and derivatives, polyvinyl pyrrolidone and its copolymers, thermoplastic cellulose derivatives, and mixtures thereof,
wherein said second layer further comprises a suitable compatible hydrophilic plasticiser or blend of hydrophilic plasticisers selected from the group consisting of acids, esters, amides, alcohols, polyalcohols, or mixtures thereof,
characterised in that said first layer has a water absorption lower than the water absorption of said second layer, said water absorptions both measured according to the test method ASTM D 570-81.

Further, the present invention refers to moisture vapour permeable liquid impermeable articles which comprise, or are made of, said multilayer structure and which have high breathability combined with good dimensional stability when they are or possibly come in contact with liquid water.

### Detailed Description of the Invention

The terms "breathable" and "breathability" are intended herein to correspond to "moisture vapour permeable" or "water vapour permeable", "Moisture vapour" and "water vapour" are also considered to be equivalent.

According to the present invention, moisture vapour permeable liquid impermeable multilayer structures are provided as well as articles comprising said multilayer structures.

The moisture vapour permeable, liquid impermeable multilayer structure according to the present invention essentially comprises at least a moisture vapour permeable, liquid impermeable first layer (which is intended to come in contact with liquid water) and at least a moisture vapour permeable, liquid impermeable second layer (which is intended to be protected from contact with liquid water by said first layer) wherein said first layer has a water absorption lower than the water absorption of said second layer, said water absorptions both measured according to the test method ASTM D 570-81.

Moisture vapour permeable, liquid impermeable articles, and particularly shape-formed, three dimensional moisture vapour permeable liquid impermeable articles are provided which comprise moisture vapour permeable, liquid impermeable multilayer structures according to the present invention.

Said multilayer structures comprise thermoplastic compositions possibly in combination with pure polymers, and have an enhanced moisture vapour permeability and dimensional stability.

The thermoplastic compositions can constitute the majority or even the sole material of the multilayer structures of the present invention. In the latter case, the structure is entirely made of the thermoplastic compositions, and in turn the article can be entirely constituted by the multilayer structure. Alternatively, the thermoplastic compositions can be utilised in combination with one or more other materials to create a composite multilayer structure comprised in the article, or also the thermoplastic compositions can constitute entirely a multilayer structure, which is then combined with other elements in the article of the present invention. In many cases, it may be preferred that a shape-formed article be comprised substantially or wholly by the thermoplastic compositions, which can provide multilayer structure without use of additional materials.

Said thermoplastic compositions are useful in the incorporation into the multilayer structures of the present invention and into the articles which can be shape-formed, three dimensional as delivered to the consumer. Said articles therefore possess at least one region that displays some three dimensional form or shape in contrast to a two dimensional or planar form. Such three dimensional form or shape may involve simple or complex surface geometries. Examples to illustrate the range include simpler constructions such as two planes joined at a line defining a right (90 degree) angle or a simple sphere to more complex constructions such as two wave form surfaces intersecting in a non-linear fashion.

However planar articles can also comprise the multilayer structures of the present invention.

Said shape formed articles may be shaped in a closed form, such as a spherical ball or a cube, or shaped with one or more openings, such as a hand covering or glove.

In response to an introduced force or pressure, the article may display deformation, that is change or alter its shape. Though not limited to the following definitions, such deformation can be thought of as a general expansion or contraction of the overall article, in one way measured by a change in enclosed volume within the general boundaries of the surfaces of the article or alternatively measured by a change in the volume of the circumscribed space as defined by the outermost surfaces of the article.

Such introduced forces or pressures include, but are not restricted to, externally or internally applied pressure increases or decreases (vacuum); mechanical compression forces; and, tensile forces being applied within the articles walls themselves (i.e. stretching a portion of the article wall).

Once the applied force or pressure is removed, the post-deformation response of the article can range from full shape recovery to an irreversible shape change.

Such articles can be re-used many times or be so constructed that the intended article life is but one use before disposal or refurbishment.

The articles, particularly the shape-formed, three dimensional articles utilising the multilayer structures of the present invention can be employed in a variety of usage areas particularly when water vapour permeation is needed but liquid barrier protection is still desired. There are other usage situations where the articles employing the multilayer structures of the present invention can provide other barrier functions such as pathogen barrier, barrier to undesirable or hazardous chemicals such as those causing a deleterious effect on human skin, or provide selective barrier for other specific elements to be blocked such as specific chemicals, gasses or biological entities.

The following paragraphs provide example categories of use where the articles utilising the multilayer structures of this invention can provide useful advantage. The listing of categories is intended for illustration purposes and is not all-inclusive and therefore is not limiting.

The multilayer structures of the present invention can be effectively utilised within personal care products, such as absorbent articles, wound care articles, or cosmetics. Non limiting examples are absorbent articles such as diapers, sanitary napkins, panty liners, incontinence products and breast pads; wound and burn dressings and bandages, warming or cooling pads for medical use; patches, bandages or wraps, e.g. for medical or cosmetic treatment, which may contain and deliver active substances; perspiration pads such as underarm-, wrist- and head perspiration pads, collar inserts, shoe inserts, hat bands; cosmetics such as make up, face masks, lipsticks, or hair gels, in order to create on the skin or on the hair a breathable film, nail polish, etc.

Other articles comprising the multilayer structures of the present invention comprise protective articles for the body, or for body parts. Non limiting examples comprise protective clothing such as working or surgical gowns and the like; hand coverings such as gloves, finger cots, mitts, mittens; foot or leg coverings such as socks, hose, pantyhose, shoes, slippers; head coverings such as hats, caps; prophylactic and contraceptive mechanical articles such as condoms; face coverings such as face masks, nose covers, ear covers or mitts; sport and fitness wearing articles, wind cheaters, sleeping bags; body support items such as male organ "athletic" supporters, brassieres; clothing for use as underwear, protective sleeves, or as a part of or wholly incorporated into protective pads. Other example articles and applications include but are not limited to: flexible or drapable clothing articles for humans such as the non-limiting examples of shirts, pants, undergarments, bibs, smocks, coats, scarves, body wraps, stockings, leggings, skirts, dresses, etc.; other flexible or drapable clothing or protecting sheets for various tasks and occupations including medical professions, agricultural jobs, mechanical assembly and repair, emergency public services, the military, athletic endeavours, cleaning positions; protective garments for animals.

A further category of articles comprising the multilayer structures of the present invention comprises articles for protecting objects. Preferred protecting articles comprise protecting bedding covers such as linen, mattress and pillow covers. Also protecting covers for cushions, comforter, duvets, upholstered portions of beds, such as headboards, or of sofas or armchairs are comprised. Other non limiting examples comprise protective articles such as dust covers for electronic/electrical products (e.g. computer keyboards, hard drives, video recorders, etc.), headrest covers for seats in vehicles, e.g. aeroplanes/trains, shrink wraps, one use table covers, etc. Articles for packaging such as for food products such as fresh produce and baked goods (bread, rolls, cakes), e.g. bags for food storage in the refrigerator, or also packaging films for microwave oven, or packages for hot "take away" foods, e.g. pizza. Further examples comprise articles for agriculture and horticulture such as, as non-limiting examples, an individual article (container, three dimensional "bag") which is placed to partially or totally enclose an individual or specific group of plants. Protective furniture coverings such as protective covers for upholstered chairs and sofas, etc. are also comprised. Other alternative protecting articles comprise construction roofing materials and house wrapping, ski, windsurf and bike/motor bike overalls, backings for carpets and wallpapers, camping tents, protecting sheets for various items (e.g. cars, tennis courts, sport grounds, etc.), sheets for gardens/greenhouses protection, tents for closing/protecting tennis courts, sport grounds, items for protection of plants from low temperatures, etc.

Alternative applications in which the multilayer structures of the present invention are applied via spraying/brushing/roll coating, typically in the form of at least two different separated solvent or emulsion based compositions and at room temperature for creating the multilayer structure according to the present invention , comprise protective, possibly peelable coatings for hard surfaces such as stone, concrete, wood (e.g. furniture), for coating/water proofing of shoes/leather articles or textiles, protective coatings for cars (e.g. during transport by ship), protective coatings for cars, boats etc. during long periods of non use, breathable paints and the like.

More in general, whenever possible in the many different applications mentioned above, the multilayer structures of the present invention can be either provided as an already formed structure, or alternatively also applied in liquid form (at least two different and separated liquid compositions), e.g. sprayed or brushed, and also possibly comprising active agents, for example to the body, e.g. in a cosmetic, medical, or protective composition, or to plants.

In general all articles comprising the multilayer structures of the present invention can be generally flexible or rigid.

A preferred category of shape-formed, three dimensional articles utilising the multilayer structures according to the present invention comprises hand covering articles, and more specifically gloves, also including gloves made of two flat material portions, at least one material portion comprising the structure of this invention, which are joined around a common perimeter typically defining the shape of a hand, and which later take a fuller, higher volume three dimensional shape when a hand is inserted during later use through an opening comprised in said perimeter.

We have discovered that the moisture vapour permeable, liquid impermeable multilayer structures of the present invention provide an enhanced breathability combined with improved dimensional stability and resistance upon contact with water or water based fluids, as will be described herein.

By comprising in the articles described above a moisture vapour permeable, liquid impermeable multilayer structure according to the present invention, an improved article can be obtained.

In particular a structure having enhanced breathability, dimensional stability and resistance, which in turn can be incorporated into, or entirely constitute, an article such as a glove as a non limiting example, can be obtained by utilising a moisture vapour permeable, liquid impermeable multilayer structure, comprising at least a moisture vapour permeable, liquid impermeable first layer and at least a moisture vapour permeable, liquid impermeable second layer, said second layer comprising a thermoplastic polymer or mixture of polymers selected from the group consisting of polyurethanes, poly-ether-amides block copolymers, polyethylene-acrylic acid copolymers, polyethylene oxide and its copolymers, poly lactide and copolymers, polyamides, polyesters, co-polyesters, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate with a vinyl acetate content of at least 28 weight %, polyvinyl alcohol and its copolymers, polyvinyl ethers and their copolymers, poly-2-ethyl-oxazoline and derivatives, polyvinyl pyrrolidone and its copolymers, thermoplastic cellulose derivatives, and mixtures thereof, and wherein said second layer further comprising a suitable compatible hydrophilic plasticiser or blend of hydrophilic plasticisers selected from the group consisting of acids, esters, amides, alcohols, polyalcohols, or mixtures thereof, wherein said first layer has a water absorption lower than the water absorption of said second layer, said water absorptions both measured according to the test method ASTM D 570-81.

Preferably, in an article comprising a moisture vapour permeable, liquid impermeable multilayer structure according to the present invention, the at least first layer of the multilayer structure constitutes the outermost layer of the structure comprised in the article.

More specifically said first layer of said multilayer structure preferably has a water absorption measured according to ASTM D 570-81 of less than 10%, preferably of less than 5%, and more preferably of less than 2%, while said second layer preferably has a water absorption measured according to ASTM D 570-81 of at least 30% , preferably of at least 40%, and more preferably of at least 50%. This is particularly preferred when the multilayer structure is comprised in an article which is entirely made of said multilayer structure consisting , for example, of at least two layers wherein said second layer constitutes the internal layer or core layer of the article and said first layer constitutes the external layer, which is intended to come or could come in contact with liquid water.

Particularly referring to a breathable glove made from a polyurethane based film, it should be pointed out that when dealing with improving such a glove, generally the desired increase of the breathability gives rise to a decrease of mechanical properties. For example referring to Thermoplastic Polyurethane (TPU) based layers including suitable plasticisers as taught in WO 99/64077 and WO 99/64505, it should be noted that they have good mechanical properties and high breathability, but, regrettably, this hydrophilic TPU generally shows a quick and copious swelling when in contact with liquid water. This swelling, which is due to the absorption of liquid water, in addition to decreasing the mechanical properties of the glove, also alters its dimensions to a non-acceptable level. We have discovered that using a multilayer structure according to the present invention solves the above problem. As a matter of fact by coating the hydrophilic polymer based layer (second layer) with a thin layer (first layer) having a water absorption lower than the water absorption of the second layer, both water absorptions measured according to the test method ASTM D 570-81, and, preferably, if the coating layer has a water absorption according to the above standard of less than 10%, preferably of less than 5%, and more preferably of less than 2%, solves the above problem. The coating layer (first layer) avoids the direct contact of liquid water with the hydrophilic core (second layer) which does not swell by absorbing liquid water, without significantly hurting the breathability. In general the thickness of the coating should be as low as possible to avoid negative effects on breathability but providing an effective action against the swelling of the internal hydrophilic layer (core layer).

On the other side it will be appreciated that the presence of the first layer allows the use of a high hydrophilic core layer (second layer) and consequently the use of a highly breathable core layer with a substantial thickness to give the required mechanical resistance to the article. Preferably this second layer or core layer should have a water absorption according to ASTM D 570-81 of at least 30%, preferably of at least 40%, and more preferably of at least 50%.

More in general as also indicated hereinbefore, the moisture vapour permeable, liquid impermeable, multilayer structure of the present invention comprises at least a moisture vapour permeable, liquid impermeable first layer and at least a moisture vapour permeable, liquid impermeable second layer, wherein said first layer has a water absorption lower than the water absorption of said second layer, said water absorptions both measured according to the test method ASTM D 570-81.

For a better understanding of the present invention said first layer and said second layer will be described in a more detailed manner in the followings.

### The moisture vapour permeable, liquid impermeable second layer.

Herein said second layer is indicated also as hydrophilic polymer based layer, or core layer or internal layer.

Suitable thermoplastic polymers comprised in the thermoplastic composition for the moisture vapour permeable, liquid impermeable second layer of the moisture vapour permeable, liquid impermeable multilayer structure of the present invention are the same or similar as those described in the patent applications WO 99/64077 and WO 99/64505 and include polyurethanes, poly-ether-amides block copolymers, polyethylene-acrylic acid copolymers, polyethylene oxide and its copolymers, poly lactide and copolymers, polyamides, polyesters, co-polyesters, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate with a vinyl acetate content of at least 28 weight %, polyvinyl alcohol and its copolymers, polyvinyl ethers and their copolymers, poly-2-ethyl-oxazoline and derivatives, polyvinyl pyrrolidone and its copolymers, thermoplastic cellulose derivatives, and mixtures thereof.

As disclosed in the above patent applications, particularly suitable preferred thermoplastic polymers are thermoplastic poly-ether-amide block copolymers (e.g. Pebax™), thermoplastic poly-ether-ester-amide block copolymers, thermoplastic polyester block copolymers (e.g. Hytrel™), thermoplastic polyurethanes (e.g. Estane™), or mixtures thereof.

Such thermoplastic polymers or mixture of polymers can be typically highly viscous in the molten state at the process conditions that are typical of the known processes of film or layer formation, e.g. an extrusion process involving a high power screw extruder. For example they may have a viscosity higher than 5000 poise at a temperature of 20°C above the DSC (Differential Scanning Calorimetry) melting point, which is the temperature identified as that corresponding to the DSC peak, or corresponding to the highest DSC peak in case of a mixture of polymers showing more than one peak, and at a frequency of 1 rad/sec.

As disclosed in the above patent applications, the viscosity of the thermoplastic compositions comprised in the moisture vapour permeable, liquid impermeable second layer of the multilayer structures of the present invention and comprising the preferred thermoplastic polymers or mixture of polymers can be preferably adjusted by including in the thermoplastic composition a suitable plasticiser, or blend of plasticisers, that is compatible with the thermoplastic polymers and that lowers the viscosity of the thermoplastic polymer or mixture of polymers in the molten state.
The thermoplastic compositions comprising the preferred suitable hydrophilic plasticiser or blend of hydrophilic plasticisers have the following complex viscosities (η* ):

50 poise < η* < 4000 poise, preferably 100 poise < η* < 2000 poise, more preferably 100 poise < η* < 1000 poise, at a frequency of 1 rad/s at a temperature of 210°C or less and η* < 2000 pose, preferably η* < 1000 poise, more preferably η* < 500 poise, at a frequency of 1000 rad/s at a process temperature (T) of 210°C or less, wherein η* represents the complex viscosity of the thermoplastic polymeric composition. Preferably the temperature T is 200°C or less and more preferably 180°C or less and most preferably from 200°C to 50°C.

The thermoplastic compositions having the complex viscosity described are more easily processable in order to provide the moisture vapour permeable, liquid impermeable second layer comprised in the multilayer structures of the present invention. For example, said thermoplastic compositions can allow for a film or layer to be e.g. formed using apparatuses known in the art for processing low viscosity hot melt compositions in a layer having a required thickness, while also keeping the advantageous characteristics of the preferred thermoplastic polymers in providing hydrophilic continuous moisture vapour permeable, liquid impermeable layers or films. Other known methods for making articles comprising the multilayer structures according to the present invention such as moulding, casting, and etc., also can take advantage from the lower viscosity of the thermoplastic compositions.

Thermoplastic compositions having such viscosities could also provide very thin films or layers.

In addition, as explained in the above mentioned patent applications, by selecting the hydrophilic plasticiser or blend of hydrophilic plasticisers to be comprised in the thermoplastic composition of the second layer of the multilayer structure of the present invention, from the group consisting of acids, esters, amides, alcohols, polyalcohols, or mixtures thereof, the advantage of an enhanced moisture vapour permeability of the resulting structure, e.g. a layer or a film, formed from the thermoplastic composition is achieved, when compared to a corresponding structure formed from a thermoplastic composition comprising the same thermoplastic polymer, but without the plasticiser.

The selected hydrophilic plasticiser or blend of hydrophilic plasticisers can also adjust the viscosity of the thermoplastic composition to the preferred values in order to facilitate the processing of the thermoplastic composition by means of one of the above described methods, for example making it processable by extruding said thermoplastic composition in a layer or film having a desired thickness, in order to form the moisture vapour permeable liquid impermeable second layer comprised in the moisture vapour permeable liquid impermeable multilayer structure of the present invention.

Suitable preferred hydrophilic plasticisers are esters of citric acid, tartaric acid, maleic acid, sorbic acid, fumaric acid, lactic acid, glyceric acid, malic acid; glycerol and its esters; sorbitol; glycolates; and mixtures thereof.

Preferably, the thermoplastic composition comprised in the moisture vapour permeable liquid impermeable second layer of the present invention comprises from 20% to 90%, preferably from 35% to 85% , and more preferably from 60% to 80% by weight of the thermoplastic composition, of the thermoplastic polymer or mixture of polymers, and from 10% to 80%, preferably from 15% to 65%, and more preferably from 20% to 40% by weight of the thermoplastic composition, of the suitable hydrophilic plasticiser or blend of hydrophilic plasticisers.

Polymers particularly preferred for the core layer are hydrophilic thermoplastic polyurethanes (TPU) such as Estane™ 58245 or Estane™ T5410 (both available from by BF Goodrich ), and mixtures thereof, while preferred hydrophilic plasticisers blended with the above polymers are Citrates, Glycerol esters, Tartrates, Polypropylene Glycol (PPG) - Polyethylene Glycol (PEG) block copolymers, PEG esters, sulphonamides. Particularly preferred are highly polar plasticisers such as Triethyl citrate (TEC) or Diacetin (DA) blended with Estane™ 58245 or Estane™ T541 0, and mixtures thereof.

The selected thermoplastic compositions comprised in the moisture vapour permeable liquid impermeable second layer of the multilayer structure of the present invention should have a water absorption according to ASTM D 570-81 of at least 30%, preferably of at least 40%, and more preferably of at least 50%.

The following Table I reports the value of water absorption according to ASTM D 570-81 for certain pure hydrophilic polymers in pellet form (dimension of pellets: 3 to 5 mm) and for certain thermoplastic hydrophilic compositions, which are useful for said second layer, in film form (thickness: about 100 micrometers).

**Table I**

| Polymer or composition | % of components (by weight) | Water absorption % |
|---|---|---|
| Estane™ 58245 | 100 | 64 |
| Estane™ T5410 | 100 | 93 |
| Estane™ 58245 | 35 | |
| Estane™ T5410 | 35 | 80 |
| Diacetin (plasticiser) | 30 | |
| Estane™ 58245 | 70 | 65 |
| Triethylcitrate (plasticiser) | 30 | |
| Estane™ 58245 | 70 | 65 |
| Diacetin (plasticiser) | 30 | |

The following Table II reports the value of plasticiser absorption for some pure hydrophilic polymers in pellet form obtained using the same standard ASTM D 570-81 method mentioned above, with the only modification of utilising liquid plasticisers, such as Triethylcitrate (TEC) and Diacetin (DA), instead of distilled water.

**Table II**

| Polymer | TEC absorption % | DA absorption % |
|---|---|---|
| Estane™ 58245 | 20 | 23 |
| Estane™ T5410 | 23 | 47 |

The above values of plasticiser absorption are indicative of the solubility or compatibility of a liquid plasticiser with the polymer, and their importance will be better explained below with reference to the first layer of the multilayer structure of the present invention.

### The moisture vapour permeable, liquid impermeable first layer.

Said first layer will be indicated in the following description also as external layer, or coating layer.

Suitable thermoplastic polymers comprised in the moisture vapour permeable, liquid impermeable first layer of the multilayer structure according to the present invention are any known thermoplastic polymer which can be processed in a film layer that is liquid impermeable and moisture vapour permeable, provided that the formed layer has a water absorption according to ASTM D 570-81 less than the water absorption according ASTM D 570-81 of the moisture vapour permeable, liquid impermeable second layer comprised in the multilayer structure of the present invention.

Particularly preferred thermoplastic polymers comprised in the moisture vapour permeable, liquid impermeable first layer can be constituted by the same polymers comprised in the second layer, or alternatively by similar polymers, for example polymers of the same broad type, but in a different grade in order to have different characteristics, for example in terms of breathability or water absorption, compared to the corresponding polymer or polymers of the thermoplastic composition of the second layer. The thermoplastic polymers comprised in the first layer can be therefore selected among those described in the above referenced patent applications WO 99/64077 and WO 99/64505. Said thermoplastic polymers can generally include polyurethanes, poly-ether-amides block copolymers, polyethylene-acrylic acid copolymers, polyethylene oxide and its copolymers, poly lactide and copolymers, polyamides, polyesters, co-polyesters, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate, polyvinyl alcohol and its copolymers, polyvinyl ethers and their copolymers, poly-2-ethyl-oxazoline and derivatives, polyvinyl pyrrolidone and its copolymers, thermoplastic cellulose derivatives, and mixtures thereof.

Particularly suitable thermoplastic polymers can be thermoplastic poly-ether-amide block copolymers (e.g. Pebax™), thermoplastic poly-ether-ester-amide block copolymers, thermoplastic polyester block copolymers (e.g. Hytrel™), thermoplastic polyurethanes (e.g. Estane™), or mixtures thereof.

The first layer of the moisture vapour permeable, liquid impermeable multilayer structure of the present invention can be constituted by a pure thermoplastic polymer, or by a mixture of thermoplastic polymers, preferably selected among those disclosed above, or alternatively can comprise additional components such as plasticisers as those described with reference to the thermoplastic compositions comprised in the second layers. Same considerations about inclusion of plasticisers for what concerns viscosity and breathability of the resulting compositions, already made with reference to the compositions comprised in the second layer of the multilayer structure of the present invention, also apply to the compositions comprised in the first layer.

In any case, as stated hereinbefore, said first layer must have a water absorption according to ASTM D 570-81 lower than the water absorption according to ASTM D 570-81 of the moisture vapour permeable, liquid impermeable second layer comprised in the multilayer structure of the present invention.
Said first layer preferably has a water absorption according to ASTM D 570-81 of less than 10%, preferably of less than 5%, and more preferably of less than 2%.

Specific polymers particularly suitable for the first layer are Estane™ 5740x955, Estane™ 58281, Estane™ 58881, Estane™ 58313, Estane™ 58280 (Estane™ series available from by BF Goodrich, USA), Lotryl 280 BA 175 (available from Atofina, France), or Finaprene 602 (available from Fina Chemicals, Belgium), or Elvax 240, Elvax 170 (Elvax series available from Du Pont, USA) and mixtures thereof, without any added plasticiser.

The following Table III reports the value of water absorption according to ASTM D 570-81 for certain pure thermoplastic polymers in pellet form (dimension of pellets: 3 to 5 mm) which are useful for said first layer.

**Table III**

| Polymer | Water absorption % |
|---|---|
| Estane™ 5740x955 | 4 |
| Estane™ 58281 | 2 |
| Estane™ 58881 | 2 |
| Estane™ 58313 | 2 |
| Estane™ 58280 | 1 |
| Elvax 240 | Less than 1 |
| Elvax 170 | Less than 1 |
| Finaprene 602 | 3 |
| Lotryl 280 BA 175 | Less than 1 |

The following Table IV reports the value of plasticiser absorption for some pure polymers in pellet form (described in the previous table) obtained using the above mentioned standard test method ASTM D 570-81 with the only modification of utilising liquid plasticisers, such as Triethylcitrate (TEC) and Diacetin (DA), instead of distilled water.

**Table IV**

| Polymer | TEC absorption % | DA absorption % |
|---|---|---|
| Estane™ 5740x955 | 31 | 6 |
| Estane™ 58281 | 24 | 9 |
| Estane™ 58881 | 12 | 7 |

The above values of plasticiser absorption are indicative of the solubility or compatibility of the plasticiser with the polymer.

In general it is preferable that the compatibility of a suitable hydrophilic plasticiser or blend of hydrophilic plasticisers comprised in the moisture vapour permeable liquid impermeable second layer of the multilayer structure of the present invention is higher than the compatibility of the same suitable hydrophilic plasticiser or same blend of hydrophilic plasticisers in the moisture vapour permeable liquid impermeable first layer of the multilayer structure of the present invention.

The above is particularly true for certain applications of the multilayer structure such as gloves where it is preferable to have the external layer (corresponding to the first layer of the mutilayer structure of the present invention) made from pure polymers or mixtures thereof without any added plasticiser which could migrate from said layer and transfer to the things with which the glove comes in contact.

Stated in other words, to avoid or limit the possible migration of plasticisers from the core layer (second layer) to the external layer (first layer) of the multi layer structure, the selected plasticiser or blend of plasticisers present in the core layer (second layer) should be more compatible in said core layer than in said external layer. In case of plasticisers which are liquid at room temperature, an indication of the plasticiser compatibility in a respective layer can be given by the solubility of the plasticiser into the polymers or alternatively into the composition of the layer, expressed in terms of absorption of the liquid plasticiser in the polymers or in the composition. As said above, this can be measured according to the same standard test method ASTM D 570-81 used for water absorption, by simply replacing distilled water with the specific liquid plasticiser. Typically, the absorption of a liquid plasticiser in the pure polymer or polymers of the layer, as shown in Tables II and IV above, can be taken as an indication of said compatibility.
Ideally a plasticiser comprised in the core layer should not be soluble or compatible in said external layer. Another useful criteria for avoiding or limiting the undesired migration of the plasticiser, again in case of liquid plasticisers, is to add a percentage of plasticiser or of blends of plasticisers in a core layer which is less than the respective solubility in the core layer and using for the external layer a pure polymer or blends of pure polymers which have a low absorption of the selected plasticisers or blends of plasticisers.

It should be noted that, as also indicated above, the value of plasticiser absorption is indicative of the solubility or compatibility of a liquid plasticiser with polymers or thermoplastic compositions, but, more in general, the solubility or compatibility of liquid or solid plasticiser(s) in thermoplastic polymers or compositions can be determined in other suitable manners, as it is known in the art.

According to a preferred embodiment of the present invention the content of suitable hydrophilic plasticiser or blend of hydrophilic plasticisers possibly comprised in the moisture vapour permeable, liquid impermeable first layer of the multilayer structure of the present invention should be not more than 50% by weight, preferably not more than 10% by weight, and more preferably 0% by weight.

The thermoplastic compositions comprised in the moisture vapour permeable liquid impermeable multilayer structures of the present invention may in addition comprise additional optional components to further improve the processibility of the compositions and also the mechanical characteristics as well as other characteristics as tackiness, resistance to ageing by light and oxygen, visual appearance etc., of the multilayer structures formed from such thermoplastic compositions.

Such optional components include tackifying resins or blends of tackifying resins having a softening point of 125°C or less. Suitable resins, which may be present by up to 50% by weight of the thermoplastic compositions , may be selected from rosins and rosin esters, hydrocarbon resins, aliphatic resins, terpene and terpene-phenolic resins, aromatic resins, synthetic C₅ resins, mixtures of synthetic C₅-C₉ resins, and mixtures thereof. Other optional components of said thermoplastic compositions include anti-oxidants, anti-ultraviolets, pigments, dyes and mixtures thereof, which may be present within the compositions at a level of up to 10% by weight of the composition.

### Methods of manufacturing

A moisture vapour permeable, liquid impermeable multilayer structure according to the present invention, in turn comprised in the moisture vapour permeable, liquid impermeable articles, may be manufactured with a process that will typically comprise the steps of providing the thermoplastic polymer or mixture of polymers and the suitable plasticiser or blend of plasticisers, heating the components and compounding them, e.g. with a known suitable mixer to form the thermoplastic composition in the molten state preferably having the desired complex viscosity η*. Obviously, this procedure will be done for each layer comprised in the multilayer structure of the present invention and with particular reference to the thermoplastic compositions of the second layer which always contain plasticisers as hereinbefore illustrated. No corresponding step will be necessary of course in case of a layer, typically the first layer according to a preferred embodiment of the present invention, constituted by a single polymer, with no added component, such as a plasticiser.

The moisture vapour permeable liquid impermeable multilayer structures according to the present invention comprising such thermoplastic compositions preferably have a moisture vapour transport rate of at least 500 g/m²· 24h, preferably at least 1000 g/m²· 24h, most preferably at least 1500 g/m²· 24h.

The articles comprising the multilayer structures of the present invention can be formed or shaped by a variety of known thermoplastic forming methods. A class of such methods is generally described as "moulding" where the material is often shaped via use of male or female moulds or combinations of moulds. Depending on the technique, certain processing temperature and pressure (or vacuum) conditions may be preferred for production of a given article. Such known moulding methods include, but are not limited to: dip moulding, blow moulding, injection moulding, compression moulding, thermoforming, vacuum thermoforming, extrusion moulding, rotational moulding, slush moulding, etc.

Afterward, the article and mould(s) are separated. Often there may be an intervening process step. The nature of the intervening step or steps will vary depending on moulding technique, environmental condition, material format, etc. For example, a dip moulded article may need to be processed to remove: (i) solvent from each layer of the multilayer structure if a solvent-based format of the raw material form of the thermoplastic compositions is chosen; (ii) water from said each layer if an emulsion-based format of the raw material form of the thermoplastic compositions is chosen; or, (iii) heat if a hot melt format of the raw material form of the thermoplastic compositions is chosen. Of course this further removing process steps and in general the considerations above can be applied to any of the known forming methods described herein also with reference to the multilayer structures as such of this invention (e.g. moulding, or casting, or coating).

Other known methods for producing the shape-formed, three dimensional articles of the present invention, namely for processing the multilayer structures comprised herein, or alternatively integrally constituting the articles, also include: film and sheet casting; blown film techniques; an additional tentering process step; an additional calendering step; an additional quenching step; an additional heat treatment step; etc. The nature of the specific production conditions or type or order of process steps will vary depending on the chosen making technique, environmental condition, material format, etc. For example, a process step may need to be included to remove: (i) solvent; (ii) water; or, (iii) heat for each layer constituting the multilayer structure as explained above with reference to the dip moulding process.

A multilayer structure according to the present invention can be produced with more than two layers. This can be accomplished by a variety of known means, including but not limited to: hot melt coating of subsequent layers, co-extrusion, extrusion coating, moulding in the different techniques described above, etc. which are also applicable to a multilayer structure made of only two layers.

The resulting multilayer structure can be then typically post formed into a shaped form such as by thermoforming, vacuum thermoforming, and other known processing methods for shaping or forming thermoplastic films and sheets. This constitutes an alternative to the direct formation of a typically shaped article comprising the multilayer structures as described above.

While it may be at times preferable that the entire planar or shape-formed three dimensional article comprising the multilayer structure of the present invention be comprised solely of said multilayer structure, the article can be a composite with one or more other materials.

For example, the composite can involve the multilayer structure of the present invention in combination with one or more other materials. Such materials include, but are not limited to: fibres, fibrous bats, non-wovens, wovens, papers, metal foils, micro-porous or porous membranes, films such as polymeric films, inorganic structures such as compressed gypsum sheets, perforated or apertured films and papers, macroscopically expanded films, cloth, substantially rigid fibre-based materials such as lumber, etc.

It is preferred that in such a case the at least first layer of the multilayer structure of the present invention constitutes the outermost layer of the multilayer structure comprise in said composite article.

Said other components may be non-absorbent, absorbent, liquid-containing, etc.

Said composite can be assembled later after at least two separate components of the shape-formed, three dimensional article utilising the multilayer structure of the present invention have been partially or wholly processed, with at least one of said components comprising said multilayer structure. Such components can be brought together in a variety of known approaches including but not limited to: sealing such as heat sealing, ultrasonic or pressure bonding or welding, RF sealing, laser sealing, etc.; crimping; adhering via use of adhesives, glues, reactive bonding materials, wetting with water or other liquids, etc.; mechanical fastening or connection via hook and loop systems, nails, staples, hardware fasteners such as hook & grommet or bolt and nut; etc.; use of attractive forces including electromagnetic forces (e.g. magnetism) and electrical charge (e.g. static electricity).

Alternatively or in addition, other material(s) can be introduced during the multilayer structure forming process, e.g. moulding, to allow concurrent mating with the other material(s) into a composite article during the shape forming step. A material could be e.g. introduced which comprises numerous separate individual pieces, for example fibres. As a non-limiting example, a portion of the surface of the multilayer structure can be contacted during the moulding process with a fibrous material to create a flocked surface without need for conventional adhesives normally used for flocking. An example product would be a glove.

Another useful technique is the process of spray coating. The thermoplastic compositions hereinbefore described lends themselves to a heated spraying technique whereas upon heating the viscosity is sufficiently lowered to allow spray coating or sputtering. Such thermoplastic composition spray coating can occur with the aid of a mould, either male or female, to build each one of the at least two layers constituting the multilayer structure which in turn constitute the surfaces or the walls of the article. Afterward, the article and mould (or mould parts) are separated from each other. Alternately, the spray coating method can employ at least two different starting raw material formats of the thermoplastic compositions such as a solvent-based approach or an emulsion.

For a composite article employing the spray coating approach, the other material may provide sufficient three dimensional structure by itself such that the other material acts as the mould for the multilayer structure, after which it is sufficiently coated the composite article is complete, avoiding the before-mentioned separation of article from mould. Said combined article component and mould can also comprise a flattened glove liner that may lie somewhat flat during the multilayer structure production, for example via spray coating, and then later takes a fuller, higher-volume shape when a hand is inserted during later use.

The thickness of the multilayer structures of this present invention can be constant or vary within the structure. Though not limited to any specific thickness range, depending upon application there may be preferred ranges. For example, the preferred range for a worn personal article may desirously range from as thick as 1500 micrometers down to less than 5 micrometers and more preferably, in certain cases, substantially less than 5 micrometers. In contrast, a construction or even packaging application may, for certain reasons, dictate a preferred range from 200 to 2000 micrometers or even thicker.

Particularly with reference to a glove made of the multilayer structure of the present invention, it was found that the total thickness of said multilayer structure should be from about 10 to about 1000 micrometres, preferably from about 20 to about 400 micrometers, and more preferably from about 40 to about 200 micrometers.

In general, and also with particular reference to a glove made of the multilayer structure of the present invention, it is preferable that the thickness of the first layer(s) of the multilayer structure is not more than 10% of said total thickness, preferably not more than 5% of said total thickness, and more preferably not more than 3% of said total thickness.

As mentioned hereinbefore, the coating layer (first layer) avoids the direct contact of liquid water with the hydrophilic core (second layer) which does not swell by absorbing liquid water, without significantly hurting the breathability.

In general the thickness of the coating layer should be as low as possible to avoid negative effects on breathability but providing an effective action against the swelling of the internal hydrophilic layer (core layer). Preferably the thickness of said coating layer should be less than 20 micrometers, preferably less than 10 micrometers, and more preferably less than 5 micrometers.

The article utilising the multilayer structures of the present invention may have areas where no polymer is present ranging from voids so small to be considered micro-porous to larger scale, macroscopic-sized voids. A portion or all of the article's surface can be apertured whereas the apertures can be a rather simple geometry like a hole or slit; or, the discrete apertures can extend beyond the horizontal plane of the surface. As an example, the protuberances can have an orifice located at its terminating end. As further example, said protuberances are of a funnel shape, similar to those described in US 3929135. The apertures located within the plane and the orifices located at the terminating end of protuberance themselves maybe circular or non circular provided the cross sectional dimension or area of the orifice at the termination of the protuberance is smaller than the cross sectional dimension or area of the aperture located within the garment facing surface of the layer. Preferably said apertured performed films are uni directional such that they have at least substantially, if not complete one directional fluid transport.

It should be noted that according to the present invention all the above described articles comprise a moisture vapour permeable, liquid impermeable multilayer structure which in turn comprises at least a moisture vapour permeable, liquid impermeable first layer and a moisture vapour permeable , liquid impermeable second layer.

A process for making a moisture vapour permeable liquid impermeable multilayer structure of the present invention, which is intended to be comprised in a planar or shape-formed three dimensional moisture vapour permeable liquid impermeable article can for example comprise the steps of providing the selected thermoplastic compositions, heating them to make them flowable, and extruding said compositions in the molten state to form each film layer constituting the multilayer structure in the desired thickness. Said structure can be included or formed into a planar or shape-formed three dimensional moisture vapour permeable liquid impermeable article according to the present invention, e.g. hand covering articles such as finger cots, mitts, mittens, gloves, or other articles as described above, by means of one of the method known in the art.

Said multilayer structure can be formed with the aid of a substrate by coating the at least two layers of the multilayer structure onto a substrate. While said substrate can be simply a formation substrate, onto which each layer of the multilayer structure is coated in order to form said structure of the desired total thickness which is subsequently separated from said substrate and used as such, water impervious composite structure can also be formed which comprises said multilayer structure and a substrate onto which each layer constituting the multilayer structure is coated, wherein the substrate is also preferably moisture vapour permeable.

Such embodiment provides a moisture vapour permeable, liquid impervious composite structure, comprised in a planar or shape-formed three dimensional moisture vapour permeable liquid impermeable article, wherein the contribution of the multilayer structure of the present invention to the performance of the composite material could reside only in the provision of a liquid barrier and hence could be advantageously provided as thinly as possible. The remaining performance physical criterion being preferably provided by the provided substrate, that therefore preferably acts also as a support layer.

Suitable substrates for use herein as support layers include two dimensional, planar micro and macro-porous films; macroscopically expanded films; formed apertured films; nonwoven and woven layers. According to the present invention the apertures in said layer may be of any configuration, but are preferably spherical or oblong and may also be of varying dimensions. The apertures preferably are evenly distributed across the entire surface of the layer, however layers having only certain regions of the surface having apertures are also envisioned.

Suitable two dimensional porous planar layers of the backsheet may be made of any material known in the art, but are preferably manufactured from commonly available polymeric materials. Suitable materials are for example Goretex™ or Sympatex™ type materials well known in the art for their application in so-called breathable clothing. Other suitable materials include XMP-1001 of Minnesota Mining and Manufacturing Company, St. Paul, Minnesota, USA and Exxaire XBF-101W, supplied by the Exxon Chemical Company. As used herein the term two dimensional planar layer refers to layers having a depth of less than 1 mm, preferably less than 0.5 mm, wherein the apertures have an average uniform diameter along their length and which do not protrude out of the plane of the layer. The apertured materials for use as a backsheet in the present invention may be produced using any of the methods known in the art such as described in EPO 293 482 and the references therein. In addition the dimensions of the apertures produced by this method may be increased by applying a force across the plane of the backsheet layer (i.e. stretching the layer).

Suitable apertured formed films include films which have discrete apertures which extend beyond the horizontal plane of the garment facing surface of the layer towards the core thereby forming protuberances. The protuberances have an orifice located at its terminating end. Preferably said protuberances are of a funnel shape, similar to those described in the already mentioned US 3,929,135.

Suitable macroscopically expanded films for use herein include films as described in for example in US 4,637,819 and US 4,591,523.

Suitable support layers also include woven and nonwoven layers, most preferably hydrophobic fibrous layers such as hydrophobic nonwoven.

The composite moisture vapour permeable multilayer structures of this embodiment can be particularly advantageous as they allow the possibility of providing a composite wherein the multilayer structure of the present invention may be coated onto the support substrate as each layer with the desired thickness. Typical coating conditions and apparatuses known in the art for the direct multi coating of hot melts can be readily utilised in order to provide the multilayer structure at the desired total thickness (i.e. the sum of the thickness of each layer constituting the multilayer structure), and , particularly to provide each different layer, which constitutes the multilayer structure, at the desired thickness.

A possible method for forming a composite laminate by coating the multilayer structure according to the present invention onto a substrate acting as a support layer is described in PCT application WO 96/25902.

At least at the coating temperature, each layer constituting the multilayer structure of the present invention, since it is made from thermoplastic compositions, can exhibit adhesive properties on the supportive substrate in order to form the composite structure such that no additional adhesive is required to achieve a permanent attachment between the multilayer structure and the substrate. In some applications it may be also desirable that the multilayer structure or at least one layer constituting it remains tacky at any temperature. In this case said thermoplastic composition comprised in at least one layer should be formulated so to have the typical characteristics of a pressure sensitive adhesive.

The moisture vapour permeable liquid impermeable articles utilising the multilayer structures of the present invention find utility in a number of applications particularly wherein liquid imperviousness and moisture vapour permeability are desirable. More specifically the present invention can be effectively utilised within shape-formed three dimensional moisture vapour permeable liquid impermeable articles such as e.g. hand covering articles comprising finger cots, mitts, mittens and preferably gloves, and also other articles as described above. Preferably a hand covering article made of the moisture vapour permeable, liquid impervious multilayer structure of the present invention should have a moisture vapour transfer rate of at least 500 g/m²· 24h, more preferably at least 1000 g/m²· 24h, and most preferably at least 1500 g/m²· 24h, when its thickness is about 100 micrometers.

### Example 1

A two layered glove structure is made by conventional dip moulding process.

In particular, breathable gloves are made by dipping porcelain glove formers in an organic solution of the selected polymer, or composition. In general, solvent choice, concentration, viscosity, temperature of the solution are chosen accordingly to the thermoplastic compositions and to the desired thickness of gloves as it is known in the art.

Material used for the thermoplastic composition comprised in the moisture vapour permeable, liquid impermeable first layer or external layer which is intended to come in contact with liquid water is:

Component A (pellets): Estane™ 5740x955, having a water absorption according to ASTM D 570-81 of 4%.

Materials used for the thermoplastic composition comprised in the moisture vapour permeable, liquid impermeable second layer or internal layer or core layer which is intended to be protected from contact with liquid water by said first layer are:
Component B (pellets): Estane™ 58245 70% by weight
Component C (liquid): Diacetin (plasticiser available from Acordis Fine Chemicals L t d (England)) 30% by weight.
This composition when tested in a film form of a thickness of about 100 micrometers has a water absorption of 65% according to ASTM D570-81.

The solvent used for both compositions is stabilized tetrahydrofuran (THF) pure at 99.9% , available from Brenntag A G (Germany).

### Product Structure of the example.

The moisture vapour permeable, liquid impermeable multilayer structure consisted of the said first and second layers and this structure constitutes the glove.

### Process of forming the glove of the example.

### Preparation of the solution for the first layer or external layer (VPM2):

Component A in pellet form is added to the solvent tetrahydrofuran (THF) under stirring to have a final concentration of about 4% by weight. This solution will be called VPM2.

Preparation of the solution for the second layer or internal layer or core layer (VPM1):

Component B in pellet form was dried for 2 hours at 100 ° C prior to use. Then pellets were added to the solvent (THF) under slow stirring (magnetic or mechanic) to have a final concentration of about 10% by weight. For easier solubilization of Component B, high shear mixing should start after all Component B is added and after it swells in the solvent. After complete solubilization of Component B, Liquid Component C was added. Ratio of Component B to Component C in the final solution is 70/30. The solution in THF of Component B plus Component C will be called VPM1. Final concentration in THF of the VPM1 solution is 14.3% by weight.

In this example, as well as in the following examples, the ranges of Brookfield viscosities are from about 18 to about 21 centipoise (at 100 rpm and 20°C) for VPM2 and from about 85 to about 92 centipoise (at 20 rpm and 20°C) for VPM1, both measured by a Brookfield Viscometer model DV II, LV Spindle 1, manufactured by Brookfield Engineering Labs Inc. (USA).

### Procedure:

A conventional dipping unit is provided with two tanks: Tank 1 is filled with the VPM 1 solution; Tank 2 is filled with VPM 2. Both solutions are maintained at a temperature of about 20°C. A typical dipping cycle comprises the following steps:
1. The glove former is fully dipped once in the VPM 2 solution, then it is immediately extracted from VPM 2 at a speed of about 10 mm/s, and it is dried, while spinning, for about 2 minutes.
2. The glove former is fully dipped in the VPM1 solution, then it is immediately extracted from VPM1 at the same speed as indicated above, and dried, while spinning, for about 2 minutes. This procedure with the VPM 1 solution is repeated three times in order to get the desired thickness of the second layer.

After complete drying the glove is gently removed from the former by hand, and turned inside out.

The thus produced glove has the following characteristics:
Total glove thickness is about 100 micrometers
First layer thickness (formed from VPM 2 solution) is from about 2 to about 3 micrometers
Second layer thickness (formed from VPM 1 solution) is from about 96 to about 97 micrometers
Its Moisture Vapour Transmission Rate (MVTR), using the Mocon Permatran - W 100K apparatus, is about 3600g/m²· 24h.
Mechanical properties of the structure of the glove are given by the stress at 100% elongation of 3.5 N/inch, and the elongation at break of 900%, both evaluated according the standard test method ASTM D 412.

It should be noted that the thickness of each layer of the multilayer structure of the present invention can be determined, for example, by photomicrograph measurement of cross-sections of the multilayer structure, or with other suitable methods, as it is well known in the art.

The above glove, using the multilayer structure according to the present invention, in confidential tests, was judged as very comfortable and resistant by users. No swelling, i.e. change of dimensions was found when they were in prolonged contact with liquid water, while its enhanced breathability contributed substantially to user comfort during its use as working or kitchen glove.

### Example 2

A moisture vapour permeable, liquid impermeable multilayer structure was made as described with reference to example 1 except that instead of using Diacetin as plasticiser Triethylcitrate (available from Acordis Fine Chemicals L t d (England)) was used in the same percentage. Therefore this time the VPM1 solution consisted of a solution of Component B and Triethylcitrate in THF at the same concentration of the example 1. In addition this time the core layer formed from the modified VPM1 solution was coated on both sides by a layer formed from the VPM2 solution of the example 1.
In this case, the procedure for obtaining the three-layered glove was:

### Procedure:

1. The glove former is fully dipped once in the VPM 2 solution, then it is immediately extracted at a speed of about 10mm/s, and it is dried, while spinning, for about 2 minutes.
2.The glove former is fully dipped in the modified VPM1 solution, then it is immediately extracted from VPM 1 at the same speed as mentioned above, and is dried, while spinning, for about 2 minutes. This procedure with the VPM 1 solution is repeated three times.
3.The glove former is fully dipped in the VPM 2 solution again and it is immediately extracted at the same speed as mentioned above and dried.

After complete drying the glove is gently removed from the former by hand.

The water absorption according to ASTM D 570-81 of the core layer is 65%, measured on a film having a thickness of about 100 micrometers.

The glove has the following characteristics measured in the same manner as mentioned with reference to example 1:
Total thickness: 100 micrometers
Thickness of the core layer (formed from VPM1 solution): about 96 micrometers
Thickness of each of the two layers formed from the VPM 2 solution: about 2 micrometers
WVTR: 3100 g/m²· 24h
Stress at 100% elongation: 4.5 N/inch
Elongation at break: 900%

As in the example 1 the above glove performed well for its intended use.

### Example 3

A three-layered glove structure is made according to the dipping procedure illustrated with reference to example 2.
This time VPM2 is a solution in THF of Estane™ 58281, while VPM1 is a solution in THF of Estane™ 58245 (35% by weight), plus Estane™ T5410 (35% by weight), plus Diacetin (30% by weight), wherein the percentages refer to the three components, excluding the solvent. The final concentration of the solutions VPM2 and VPM1 are the same as in the example 1.

The water absorption according to ASTM D 570-81 of the core layer is 80% measured on a film of a thickness of about 100 micrometers, while the water absorption according to ASTM D 570-81 of the outer layers is 2% measured on the pure polymer in pellets.

The glove has the following characteristics measured in the same manner as mentioned with reference to example 1:
Total thickness: 100 micrometers
Thickness of the core layer (formed from VPM1 solution): about 97 micrometers
Thickness of each of the two layers formed from the VPM 2 solution: about 1.5 micrometers
WVTR: 3600 g/m²· 24h
Stress at 100% elongation: 3.6 N/inch
Elongation at break: 930%

As in the example 1 the above glove performed well for its intended use.

### Tests and measurements

The complex viscosity η* is measured using a Rheometer RDA-II available from Rheometrics Co.

### Water absorption

The determination of the relative rate of water absorption by pure thermoplastic polymers or thermoplastic compositions was conducted according to the standard Test Method ASTM D 570-81. It should be noted that when the determination of water absorption was made for materials in pellet form (typically pure polymers), pellets having a diameter ranging from 3 to 5 mm were tested, while, when the measure of water absorption was made for materials in film form (typically thermoplastic compositions), pieces having an approximately square shape with a dimension ranging from 3 to 4mm were cut from a film of the selected thickness and tested.

For all tests a 24 hours immersion in distilled water at 23 ° C was chosen and the percentage of water absorbed in accordance with the ASTM D 570-81 standard was reported.

### Moisture Vapour Transmission Rate (MVTR)

The Moisture Vapour Transmission Rate (MVTR) of all tested samples was measured at a temperature of 38 ° C using a Mocon Permatran - W 100K apparatus manufactured by Mocon Inc. - Minneapolis (USA) and following the procedure described in the apparatus manual. The values are expressed in g/m²· 24h. It should be noted that any value of MVTR, pertaining to the structures and to the related articles of the present invention, is intended to be measured in the same manner by said apparatus.

### Thickness of the multilayer structures

Total thickness (expressed in micrometers) of the multilayer structures was measured using a low pressure Mitutoyo dial caliper model n. 7301, available from Mitutoyo Corporation (Japan) and its International Affiliated.

## Claims

1. A moisture vapour permeable, liquid impermeable, multilayer structure, comprising at least a moisture vapour permeable, liquid impermeable first layer and at least a moisture vapour permeable, liquid impermeable second layer, said second layer comprising:
a thermoplastic polymer or mixture of polymers selected from the group consisting of polyurethanes, poly-ether-amides block copolymers, polyethylene-acrylic acid copolymers, polyethylene oxide and its copolymers, poly lactide and copolymers, polyamides, polyesters, co-polyesters, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate with a vinyl acetate content of at least 28 weight %, polyvinyl alcohol and its copolymers, polyvinyl ethers and their copolymers, poly-2-ethyl-oxazoline and derivatives, polyvinyl pyrrolidone and its copolymers, thermoplastic cellulose derivatives, and mixtures thereof,
wherein said second layer further comprises a suitable compatible hydrophilic plasticiser or blend of hydrophilic plasticisers selected from the group consisting of acids, esters, amides, alcohols, polyalcohols, or mixtures thereof,
**characterised in that** said first layer has a water absorption lower than the water absorption of said second layer, said water absorptions both measured according to the test method ASTM D 570-81.

2. A moisture vapour permeable, liquid impermeable multilayer structure, according to claim 1 **characterised in that** said moisture vapour permeable, liquid impermeable first layer comprises a thermoplastic polymer or mixture of polymers selected from the group consisting of polyurethanes, poly-ether-amides block copolymers, polyethylene-acrylic acid copolymers, polyethylene oxide and its copolymers, poly lactide and copolymers, polyamides, polyesters, co-polyesters, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate, polyvinyl alcohol and its copolymers, polyvinyl ethers and their copolymers, poly-2-ethyloxazoline and derivatives, polyvinyl pyrrolidone and its copolymers, thermoplastic cellulose derivatives, and mixtures thereof.

3. A moisture vapour permeable, liquid impermeable multilayer structure, according to claim 2 wherein said moisture vapour permeable, liquid impermeable first layer further comprises a suitable compatible hydrophilic plasticiser or blend of hydrophilic plasticisers selected from the group consisting of acids, esters, amides, alcohols, polyalcohols, or mixtures thereof, **characterised in that** said suitable compatible hydrophilic plasticiser or said blend of hydrophilic plasticisers are in an amount not more than 50% by weight , preferably not more than 10% by weight., more preferably 0% by weight.

4. A moisture vapour permeable, liquid impermeable multilayer structure according to any preceding claims wherein said first layer has a water absorption according to ASTM D 570- 81 of less than 10% , preferably of less than 5%,and more preferably of less than 2%, and said second layer has a water absorption according to ASTM D 570-81 of at least 30% , preferably of least 40%, and more preferably of at least 50%.

5. A multilayer structure according to any preceding claims having a water vapour transmission rate (WVTR) of at least 500 g/m^{2.} 24h, preferably of at least 1000 g/m^{2.} 24h, more preferably of at least 1500 g/m^{2.} 24h.

6. A moisture vapour permeable, liquid impermeable article wherein said article comprises a multilayer structure according to any preceding claim, wherein preferably said at least first layer constitutes the outermost layer of said structure in said article.

7. A moisture vapour permeable, liquid impermeable article according to claim 6 wherein said article is a shape-formed, three dimensional article.

8. A moisture vapour permeable, liquid impermeable article according to claim 6 or to claim 7 wherein said article is made of said multilayer structure and wherein said at least first layer of said multilayer structure constitutes the external layer of said article.

9. A moisture vapour permeable, liquid impermeable article according to claim 8, wherein said article is a hand covering article.

10. A moisture vapour permeable, liquid impermeable article according to claim 9, wherein said article is a glove.

11. A glove according to claim 10 wherein the total thickness of said multilayer structure is from about 10 to about 1000 micrometers, preferably from about 20 to about 400 micrometers, and more preferably from about 40 to about 200 micrometers.

12. A glove according to claim 11 wherein the thickness of said at least first layer of said multilayer structure is not more than 10% of said total thickness, preferably not more than 5% of said total thickness, and more preferably not more than 3% of said total thickness.

13. A glove according to claim 12 having a water vapour transmission rate (WVTR) of at least 500 g/m²· 24h, preferably of at least 1000 g/m²· 24h, more preferably of at least 1500 g/m²· 24h.

## Patentansprüche

1. Wasserdampfdurchlässige, flüssigkeitsundurchlässige Mehrschicht
struktur, umfassend mindestens eine wasserdampfdurchlässige, flüssigkeitsundurchlässige erste Schicht und mindestens eine wasserdampfdurchlässige, flüssigkeitsunduchlässige zweite Schicht, wobei die zweite Schicht umfasst:
ein thermoplastisches Polymer oder eine Mischung aus Polymeren, ausgewählt aus der Gruppe, bestehend aus Polyurethanen, Polyetheramid-Blockcopolymeren, Polyethylen-Acrylsäure-Copolymeren, Polyethylenoxid und seinen Copolymeren, Polylactid und Copolymeren, Polyamiden, Polyestern, Copolyestern, Polyester-Blockcopolymeren, sulfonierten Polyestern, Polyetherester-Blockcopolymeren, Polyetherester-Amid-Blockcopolymeren, Polyacrylaten, Polyacrylsäuren und Derivaten, Ionomeren, Polyethylenvinylacetat mit einem VinylacetatGehalt von mindestens 28 Gew.-%, Polyvinylalkohol und seinen Copolymeren, Polyvinylethern und deren Copolymeren, Poly-2-ethyloxazolin und Derivaten, Polyvinylpyrrolidon und dessen Copolymeren, thermoplastischen Cellulosederivaten und Mischungen davon,
worin die zweite Schicht ferner einen geeigneten verträglichen hydrophilen Weichmacher oder eine Mischung aus hydrophilen Weichmachern enthält, ausgewählt aus der Gruppe bestehend aus Säuren, Estern, Amiden, Alkoholen, Polyalkoholen oder Mischungen davon,
**dadurch gekennzeichnet, dass** die erste Schicht eine Wasserabsorption aufweist, die niedriger ist als die Wasserabsorption der zweiten Schicht, wobei die Wasserabsorptionen beide gemäß dem Testverfahren ASTM D 570-81 gemessen werden.

2. Wasserdampfdurchlässige, flüssigkeitsundurchlässige Mehrschichtstruktur nach Anspruch 1, **dadurch gekennzeichnet, dass** die wasserdampfdurchlässige, flüssigkeitsundurchlässige erste Schicht ein thermoplastisches Polymer oder eine Mischung von Polymeren, ausgewählt aus der Gruppe, bestehend aus Polyurethanen, Polyetheramid-Blockcopolymeren, Polyethylen-Acrylsäure-Copolymeren, Polyethylenoxid und seinen Copolymeren, Polylactid und Copolymeren, Polyamiden, Polyestern, Copolyestem, Polyester-Blockcopolymeren, sulfonierten Polyestem, Polyetherester-Blockcopolymeren, Polyetherester-Amid-Blockcopolymeren, Polyacrylaten, Polyacrylsäuren und Derivaten, Ionomeren, Polyethylenvinylacetat, Polyvinylalkohol und dessen Copolymeren, Polyvinylethern und deren Copolymeren, Poly-2-ethyloxazolin und Derivaten, Polyvinylpyrrolidon und dessen Copolymeren, thermoplastischen Cellulosederivaten und Mischungen davon, umfasst.

3. Wasserdampfdurchlässige, flüssigkeitsundurchlässige Mehrschichtstruktur nach Anspruch 2, worin die wasserdampfdurchlässige, flüssigkeitsundurchlässige erste Schicht weiter einen geeigneten verträglichen hydrophilen Weichmacher oder eine Mischung aus hydrophilen Weichmachern, ausgewählt aus der Gruppe, bestehend aus Säuren, Estern, Amiden, Alkoholen, Polyalkoholen oder Mischungen davon, umfasst, **dadurch gekennzeichnet, dass** der geeignete verträgliche hydrophile Weichmacher oder die Mischung aus hydrophilen Weichmachern in einer Menge von nicht mehr als 50 Gew.-%, vorzugsweise nicht mehr als 10 Gew.-%, mehr bevorzugt 0 Gew.-% vorliegen.

4. Wasserdampfdurchlässige, flüssigkeitsundurchlässige Mehrschichtstruktur nach einem der vorangehenden Ansprüche, worin die erste Schicht eine Wasserabsorption gemäß ASTM D 570- 81 von weniger als 10 %, vorzugsweise von weniger als 5 % und mehr bevorzugt von weniger als 2 % aufweist und die zweite Schicht eine Wasserabsorption gemäß ASTM D 570-81 von mindestens 30 %, vorzugsweise mindestens 40 % und mehr bevorzugt von mindestens 50 % aufweist.

5. Mehrschichtstruktur nach einem der vorangehenden Ansprüche mit einer Wasserdampfdurchlässigkeit (WVTR) von mindestens 500 g/m²·24 h, vorzugsweise mindestens 1000 g/m²·24 h, mehr bevorzugt mindestens 1500 g/m²·24 h.

6. Wasserdampfdurchlässiger, flüssigkeitsundurchlässiger Gegenstand, wobei der Gegenstand eine Mehrschichtstruktur nach einem der vorangehenden Ansprüche umfasst, worin die mindestens erste Schicht vorzugsweise die äußerste Schicht der Struktur in dem Gegenstand darstellt.

7. Wasserdampfdurchlässiger, flüssigkeitsundurchlässiger Gegenstand nach Anspruch 6, wobei der Gegenstand ein in Form gebrachter, dreidimensionaler Gegenstand ist.

8. Wasserdampfdurchlässiger, flüssigkeitsundurchlässiger Gegenstand nach Anspruch 6 oder Anspruch 7, wobei der Gegenstand aus der Mehrschichtstruktur besteht und wobei die erste Schicht der Mehrschichtstruktur die Außenschicht des Gegenstands darstellt.

9. Wasserdampfdurchlässiger, flüssigkeitsundurchlässiger Gegenstand nach Anspruch 8, wobei der Gegenstand ein Handschonungsartikel ist.

10. Wasserdampfdurchlässiger, flüssigkeitsundurchlässiger Gegenstand nach Anspruch 9, worin der Gegenstand ein Handschuh ist.

11. Handschuh nach Anspruch 10, worin die Gesamtdicke der Mehrschichtstruktur von etwa 10 bis etwa 1000 µm, vorzugsweise von etwa 20 bis etwa 400 µm, und mehr bevorzugt von etwa 40 bis etwa 200 µm beträgt.

12. Handschuh nach Anspruch 11, worin die Dicke der mindestens ersten Schicht der Mehrschichtstruktur nicht mehr als 10 % der Gesamtdicke, vorzugswise nicht mehr als 5 % der Gesamtdicke und mehr bevorzugt nicht mehr als 3 % der Gesamtdicke ausmacht.

13. Handschuh nach Anspruch 12 mit einer Wasserdampfdurchlässigkeit (WVTR) von mindestens 500 g/m²·24 h, vorzugsweise von mindestens 1000 g/m²·24 h, mehr bevorzugt von mindestens 1500 g/m²·24 h.

## Revendications

1. Structure multi-couches perméable à la vapeur d'humidité, imperméable aux liquides,
comprenant au moins une première couche perméable à la vapeur d'humidité, imperméable aux liquides et au moins une deuxième couche perméable à la vapeur d'humidité, imperméable aux liquides, ladite deuxième couche comprenant:
un polymère thermoplastique ou un mélange de polymères choisis dans le groupe constitué par des polyuréthanes, des copolymères poly(éther-amide) séquencés, des copolymères poly(éthylène-acide acrylique), de l'oxyde de polyéthylène et ses copolymères, du polylactide et copolymères, des polyamides, des polyesters, des copolyesters, des copolymères polyester séquencés, des polyesters sulfonés, des copolymères poly(éther-ester) séquencés, des copolymères poly(éther-ester-amide) séquencés, des polyacrylates, des acides polyacryliques et dérivés, des ionomères, du poly(éthylène-acétate de vinyle) avec une teneur en acétate de vinyle d'au moins 28 % en poids, de l'alcool polyvinylique et ses copolymères, des poly(vinyl-éther) et leurs copolymères, de la poly-2-éthyl-oxazoline et dérivés, de la polyvinylpyrrolidone et ses copolymères, des dérivés thermoplastiques de la cellulose, et leurs mélanges,
dans laquelle la deuxième couche comprend en outre un plastifiant hydrophile compatible approprié ou un mélange de plastifiants hydrophiles choisis dans le groupe constitué par des acides, des esters, des amides, des alcools, des polyalcools, ou leurs mélanges,
**caractérisée en ce que** ladite première couche a une absorption d'eau inférieure à l'absorption d'eau de ladite deuxième couche, lesdites absorptions d'eau toutes deux étant mesurées selon la méthode d'essai ASTM D 570-81.

2. Structure multi-couches perméable à la vapeur d'humidité, imperméable aux liquides, selon la revendication 1 **caractérisée en ce que** ladite première couche perméable à la vapeur d'humidité, imperméable aux liquides comprend un polymère thermoplastique ou un mélange de polymères choisi dans le groupe constitué par des polyuréthanes, des copolymères poly(éther-amide) séquences, des copolymères poly(éthylène-acide acrylique), de l'oxyde de polyéthylène et ses copolymères, du polylactide et copolymères, des polyamides, des polyesters, des copolyesters, des copolymères polyester séquencés, des polyesters sulfonés, des copolymères poly(éther-ester) séquencés, des copolymères poly(éther-ester-amide) séquencés, des polyacrylates, des acides polyacryliques et dérivés, des ionomères, du poly(éthylène-acétate de vinyle), de l'alcool polyvinylique et ses copolymères, des éthers de polyvinyle et leurs copolymères, de la poly-2-éthyl-oxazoline et dérivés, de la polyvinylpyrrolidone et ses copolymères, des dérivés thermoplastiques de la cellulose, et leurs mélanges.

3. Structure multi-couches perméable à la vapeur d'humidité, imperméable aux liquides, selon la revendication 2 dans laquelle ladite première couche perméable à la vapeur d'humidité, imperméable aux liquides comprend en outre un plastifiant hydrophile compatible approprié ou un mélange de plastifiants hydrophiles choisis dans le groupe constitué par des acides, des esters, des amides, des alcools, des polyalcools, ou leurs mélanges, **caractérisée en ce que** ledit plastifiant hydrophile compatible approprié ou ledit mélange de plastifiants hydrophiles est présent en une quantité pas supérieure à 50 % en poids, de préférence pas supérieure à 10 % en poids, plus préférablement 0 % en poids.

4. Structure multi-couches perméable à la vapeur d'humidité, imperméable aux liquides selon l'une quelconque des revendications précédentes dans laquelle ladite première couche a une absorption d'eau selon l'ASTM D 570- 81 inférieure à 10 %, de préférence inférieure à 5 %, et plus préférablement inférieure à 2 %, et ladite deuxième couche a une absorption d'eau selon l'ASTM D 570-81 d'au moins 30 %, de préférence d'au moins 40 %, et plus préférablement d'au moins 50 %.

5. Structure multi-couches selon l'une quelconque des revendications précédentes ayant un taux de perméabilité à l'humidité (WVTR) d'au moins 500 g/m²· 24 heures, de préférence d'au moins 1000 g/m²· 24 heures, plus préférablement d'au moins 1500 g/m²· 24 heures.

6. Article perméable à la vapeur d'humidité, imperméable aux liquides, dans lequel ledit article comprend une structure multi-couches selon l'une quelconque revendication précédente, dans lequel de préférence ladite première couche au moins constitue la couche la plus externe de ladite structure dans ledit article.

7. Article perméable à la vapeur d'humidité, imperméable aux liquides selon la revendication 6 dans lequel ledit article est un article tridimensionnel conformé.

8. Article perméable à la vapeur d'humidité, imperméable aux liquides selon la revendication 6 ou la revendication 7 dans lequel ledit article est fabriqué à partir de ladite structure multi-couches et dans lequel ladite première couche au moins de ladite structure multi-couches constitue la couche externe dudit article.

9. Article perméable à la vapeur d'humidité, imperméable aux liquides selon la revendication 8, dans lequel ledit article est un article de protection pour la main.

10. Article perméable à la vapeur d'humidité, imperméable aux liquides selon la revendication 9, dans lequel ledit article est un gant.

11. Gant selon la revendication 10 dans lequel l'épaisseur totale de ladite structure multi-couches est d'environ 10 à environ 1000 µm, de préférence d'environ 20 à environ 400 µm, et plus préférablement d'environ 40 à environ 200 µm.

12. Gant selon la revendication 11 dans lequel l'épaisseur de ladite première couche au moins de ladite structure multi-couches n'est pas supérieure à 10 % de ladite épaisseur totale, de préférence pas supérieure à 5 % de ladite épaisseur totale, et plus préférablement pas supérieure à 3 % de ladite épaisseur totale.

13. Gant selon la revendication 12 ayant un taux de perméabilité à l'humidité (WVTR) d'au moins 500 g/m²· 24 heures, de préférence d'au moins 1000 g/m²· 24 heures, plus préférablement d'au moins 1500 g/m²· 24 heures.
